# EUROPÄISCHE PATENTSCHRIFT

(11) **EP 4 124 374 B1**
(45) Veröffentlichungstag und Bekanntmachung des Hinweises auf die Patenterteilung: **04.10.2023**
(21) Anmeldenummer: 21188244.4
(22) Anmeldetag: 28.07.2021
(51) Int. Cl.: B01D 46/00, B01D 46/02, B01D 46/10

(54) **FILTERANORDNUNG MIT FILTER IN EINEM GEHÄUSE**
FILTER ASSEMBLY WITH FILTER IN A HOUSING
AGENCEMENT DE FILTRE POURVU DE FILTRE DANS UN BOÎTIER

(43) Veröffentlichungstag der Anmeldung: 01.02.2023
(73) Patentinhaber: Carl Freudenberg KG, 69469 Weinheim (DE)
(72) Erfinder: Sieh, Maik, 69207 Sandhausen (DE); Schumacher, Sascha, 69483 Wald-Michelbach (DE)

(56) Entgegenhaltungen:
- EP-A1- 3 848 109
- DE-U1-202007 014 821
- US-A1- 2021 101 104

## Beschreibung

Die Erfindung betrifft eine Filteranordnung mit einem Filter und mit einem Gehäuse zur Aufnahme des Filters. Der Filter besitzt einen Filterrahmen, in welchem mindestens ein Filterelement aufgenommen ist, wobei an dem Filterrahmen eine umlaufende Dichtung mit mindestens einer radialen Dichtlippe angeordnet ist.

### Stand der Technik

Aus dem Stand der Technik sind Filterelemente wie z.B. Taschenfilter bekannt. Sie werden zur Filtration von Fluiden, insbesondere von Luft, verwendet. Hierzu werden die Filterelemente üblicherweise in Filtergehäuse eingesetzt und mittels Befestigungselementen arretiert, z.B. verschraubt oder verrastet. Um eine effiziente Filtration zu gewährleisten, muss sowohl die Verbindung von Filtertasche und Filterrahmen innerhalb des Filters als auch die Verbindung zwischen dem Filterrahmen des Filterelements und dem Filtergehäuse eine hohe Dichtigkeit aufweisen. Um diese zu gewährleisten, werden üblicherweise zusätzliche Dichtungen eingesetzt. Ein solcher Filter ist in der EP 3 453 441 B1 beschrieben. Bei der Montage des Filters im Gehäuse ist darauf zu achten, dass die Dichtung nicht beschädigt wird und, dass nach erfolgter Montage ein guter Sitz der Dichtung gewährleistet wird. Bei Verschraubung des Filters mit dem Gehäuse ist darauf zu achten, dass eine gleichmäßige Klemmkraft aufgebracht wird und es zu keiner Verformung des Filterrahmens kommt. Nachteilig dabei ist, dass die Montage fehleranfällig ist und deshalb nur durch Fachpersonal durchgeführt werden sollte.

Die DE 20 2007 014 821 U1 zeigt ein Filterelement in Form einer zylindrischen Filterpatrone. Der Filterrahmen des Filters wird durch runde Endscheiben gebildet. An einem Kragen der einen Endscheibe ist eine Dichtung mit zwei Dichtlippen und einer Staublippe vorgesehen, welche die Abdichtung gegenüber einem Filtergehäuse bewirken. Alle Dichtlippen erstrecken sich senkrecht zur Mittelachse und Hauptdurchströmungsrichtung des Filterelements.

### Aufgabenstellung

Aufgabe der vorliegenden Erfindung ist es eine Filteranordnung zu schaffen, bei welcher ein Filter in einem Gehäuse einfach, sicher und zuverlässig aufgenommen ist und werkzeugfrei eingesetzt werden kann.

### Technische Lösung

Gelöst wird diese Aufgabe durch eine Filteranordnung wie sie nachfolgend beschrieben und beansprucht ist.

Erfindungsgemäß wurde als vorteilhaft erkannt den Filter in einem Presssitz in dem Gehäuse aufzunehmen.

Die erfindungsgemäße Filteranordnung besitzt einen Filter und ein Gehäuse zur Aufnahme des Filters. Der Filter besitzt einen Filterrahmen, in welchem mindestens ein Filterelement aufgenommen ist und an dem Filterrahmen ist außenseitig eine am Umfang des Filterrahmens umlaufende Dichtung mit mindestens einer radialen umlaufenden Dichtlippe angeordnet zur radialen Abdichtung des Filters zum Gehäuse. Radial meint dabei radial zur Erstreckung und Durchströmungsrichtung des Filters.

Ein Filterrahmen im Sinne der vorliegenden Erfindung ist eine Einfassung, die eine Öffnung umgibt. Die Dichtlippe kann als umlaufender Elastomerkörper, nämlich als ein Formkörper, ausgeführt sein, der ein elastisches Polymer enthält oder aus diesem besteht, und erstreckt sich über den gesamten Umfang des Filterrahmens. Somit korrespondiert die Form des Elastomerkörpers mit der Form des Filterrahmens und weist in der Mitte eine Öffnung auf, durch welche bei der Filtration das zu filternde Fluid strömt.

Der Filter ist mit seiner umlaufenden Dichtung in einem Presssitz in dem Gehäuse aufgenommen, was auch als zylindrischer Presssitz bezeichnet werden kann. Der Presssitz gewährleistet dabei eine sichere Halterung in seiner Montageposition auch bei mechanischen Beanspruchungen im Betrieb einer mobilen Anwendung, z.B. Vibrations- und Fallbedingungen für Traktorkabinen. Weiter verhindert der Presssitz Leckageströmungen an der Dichtung, so dass die Leckagerate <2% beträgt. Da bei Verwendung der Filteranordnung in einer Fahrzeugkabine zusätzlich Undichtigkeiten an Türen und Fenstern auftreten, muss das Filterelement im eingebauten Zustand optimalerweise die Anforderungen der Leckagefreiheit gemäß EN1822 (7.5.2) erfüllen.

Erfindungsgemäß weist die umlaufende Dichtung zwei radiale Dichtlippen auf, was eine besonders sichere Abdichtung bewirkt.

Die umlaufende Dichtung besitzt eine umlaufende Staublippe, welche auch als Schutzlippe bezeichnet wird. Die Staublippe dient zur Abdeckung des Spalts zwischen Filterrahmen und Gehäuse, wobei die Staublippe stromaufwärtig - in Durchströmungsrichtung des Filters gesehen - zur mindestens einen radialen Dichtlippe angeordnet ist. Die Staublippe verhindert ein Eindringen von groben Schmutzpartikel in den Spalt und bietet gleichzeitig eine optische Aufwertung, indem der Spalt nicht mehr sichtbar ist.

Gemäß der Erfindung sind die zwei radialen Dichtlippen um einen spitzen Neigungswinkel α1, α2 entgegen der Durchströmungsrichtung geneigt und die Staublippe ist um einen spitzen Neigungswinkel β in Durchströmungsrichtung geneigt. Wenn die beiden spitzen Neigungswinkel α1, α2 der zwei radialen Dichtlippen gleich groß sind, haben diese eine parallele Anordnung. Die beiden spitzen Neigungswinkel α1, α2 können aber auch unterschiedlich sein, wobei bevorzugt ist, dass es keine große Abweichung zwischen den beiden gibt, z.B. einen Unterschied von maximal ca. 5°.

Durch die vorbeschriebene Ausgestaltung der Neigungswinkel können der Sitz der Dichtung des Filters weiter verbessert und die Montage des Filters weiter vereinfacht werden. Der Filter lässt sich so besonders gut in das Gehäuse einschieben. Versuche haben ergeben, dass ein Neigungswinkel α1, α2 von 15 - 45°, insbesondere von ca. 30° und ein Neigungswinkel β von 30 - 60°, insbesondere von ca. 45° eine besonders gute Abdichtung bei gleichzeitig einfacher Montage ermöglichen.

In der Filteranordnung sind die umlaufende Dichtung und das Gehäuse kraftschlüssig miteinander verbunden. Dazu ist die Passung zwischen der Öffnung des Gehäuses und der umlaufenden Dichtung des Filterrahmes so gewählt, dass ein Presssitz bzw. eine Presspassung gewährleistet wird. Eine Presspassung kann auch als Übermaßpassung bezeichnet werden. Befestigungsmittel zur Arretierung des Filters in dem Gehäuse sind nicht erforderlich und die Montage kann einfach, sicher, zuverlässig und werkzeugfrei erfolgen. In vorteilhafter Weise wird der Filter auch ohne weitere Befestigungsmittel sicher in dem Gehäuse gehalten und behält auch bei Erschütterungen der Filteranordnung seinen definierten Sitz in dem Gehäuse bei. Daher kann eine solche Filteranordnung besonders gut in der Kabinenzuluftfiltration von Offroad-Fahrzeugen eingesetzt werden.

Die umlaufende Dichtung kann stoffschlüssig mit dem Filterrahmen verbunden sein, z.B. durch Verkleben oder integrierte Fertigung, sodass eine sichere Abdichtung zwischen Filterelement und Filterrahmen gewährleistet wird. Zusätzlich kann auch noch eine formschlüssige Verbindung erfolgen, z.B. durch Verwendung von mechanischen Hinterkrallungen.

In Weiterbildung der Erfindung weist die umlaufende Dichtung eine Kompensationsnut auf, welche als anströmseitige umlaufende Vertiefung ausgebildet ist.

Die Kompensationsnut kann vorteilhafterweise Rückstellungskräfte verringern. Insbesondere die Kombination von Dichtlippe und Kompensationsnut trägt zu einer leckagefreien Montage des Filters bei sehr hoher Dichtigkeit bei.

In möglicher Ausgestaltung der Filteranordnung kann deren umlaufende Dichtung als Spritzgussteil aus spritzgießfähigem thermoplastischem Elastomer (TPE) ausgeführt sein. Die Material- und Fertigungseigenschaften von TPE sind für diesen Einsatzzweck dienlich. Ein mögliches besonders geeignetes TPE ist Thermoplastisches Vulkanisat (TPV).

Das Material der umlaufenden Dichtung kann in einer Ausgestaltung der Dichtungsanordnung eine Shore Härte A von 30 - 78 besitzt, insbesondere von 50 - 70, bei normgerecht Messungen nach DIN ISO 7619-1 oder ISO 868 oder ASTM D2240.

Die Filteranordnung kann gemäß in verschiedenen Varianten einen als Taschenfilter, Kassettenfilter, Panelfilter, Kantenleimfilter oder Flachfilter ausgeführten Filter besitzen. Insbesondere kann der Filter mindestens ein plissiertes Filterelement aufweisen. Der Filter kann mehrere Filterstufen aufweisen und als HEPA (High efficiency particulate air)-Filter gemäß EN 1822-1: 2009 ausgestaltet sein.

Bei der Filteranordnung können die umlaufende Dichtung und der Filterrahmen in vorteilhafter Weise stoffschlüssig miteinander verbunden sein. Der Filterrahmen und die umlaufende Dichtung können integriert gefertigt sein, insbesondere im Mehr-Komponenten-Spritzgussverfahren hergestellt sein, z.B. im sogenannten 2K-Spritzgussverfahren oder 3K-Spritzgussverfahren. Alternativ ist eine Verbindung durch Verkleben möglich.

Die Erfindung betrifft auch die Verwendung einer wie obenstehend beschriebenen Filteranordnung als Innenraumluftfilteranordnung zur Filtration und Reinigung der Kabinenzuluft in einem Fahrzeug, welches einer erhöhten Schadstoffbelastung unterliegt, insbesondere in einem Nutzfahrzeug, einem Schwerlastfahrzeug oder einem Offroadfahrzeug. Bei den Fahrzeugen kann es sich beispielsweise handeln um Lastwagen, Baumaschinen, Walzen, Raupenfahrzeuge, Straßenfräsen, Planierraupen, Laderaupen, Bagger, Krähne, Erntemaschinen, Landmaschinen, Mähdrescher, Häcksler, Traktoren, selbstfahrende Feldspritzen oder Forstfahrzeuge.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
Fig. 1 einen Ausschnitt einer vergrößerten Darstellung einer Filteranordnung mit einem Taschenfilter
Fig. 2 einen Ausschnitt einer vergrößerten Darstellung des Taschenfilters aus Fig. 1
Fig. 3 eine räumliche Darstellung einer Ausführungsform eines Kassettenfilters
Fig. 4 eine grob schematische Ansicht einer Filteranordnung

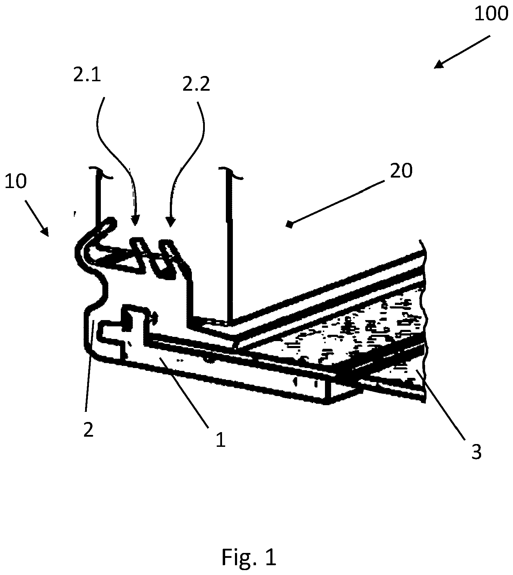

Fig. 1 zeigt einen Ausschnitt einer vergrößerten Darstellung einer Filteranordnung 100 mit einem Taschenfilter 10, welcher von zu reinigender Luft durchströmt werden kann. Der Taschenfilter 10 ist in einem Gehäuse 20 aufgenommen. Der Filter 10 besitzt einen Filterrahmen 1, in welchem ein Filterelement 3 aufgenommen ist. Das Filterelement 3 ist in dem dargestellten Ausführungsbeispiel als Filtertasche aus Vliesstoff ausgebildet. An dem Filterrahmen 1 ist eine außenseitig, am Umfang des Filterrahmens 1 umlaufende Dichtung 2 angeordnet. Diese Dichtung 2 weist hier eine erste radiale Dichtlippe 2.1 und eine zweite radiale Dichtlippe 2.2 auf, welche zur radialen Abdichtung des Filters 10 gegenüber dem Gehäuse 20 dienen. Für ein bessere Sichtbarkeit sind die Dichtlippen 2.1 und 2.2 in ihrer ursprünglichen, nicht komprimierten Position dargestellt. Die Montage des Filters 10 erfolgt, indem der Filter 10 - im Bild von links nach rechts - in das Gehäuse 20 eingeschoben wird. Dabei legen sich die Dichtlippen 2.1 und 2.2 an die Dichtfläche des Gehäuses 20 an und bewirken so die radiale Dichtung.

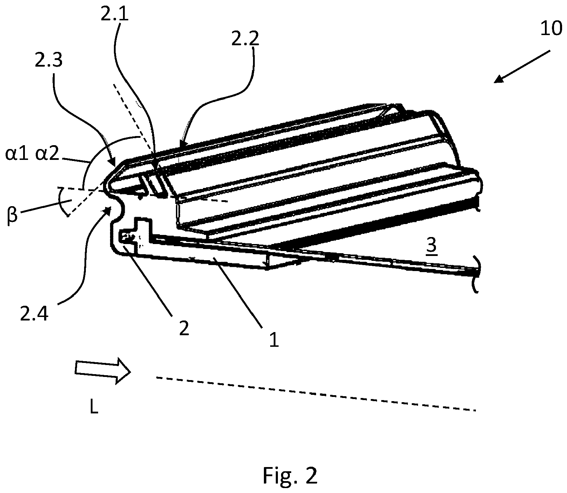

Fig. 2 zeigt einen Ausschnitt einer vergrößerten Darstellung des Taschenfilters 10 aus Fig. 1. Aus der Darstellung geht der Aufbau der umlaufenden Dichtung 2 deutlich hervor, welcher nachfolgend beschrieben werden soll. Die umlaufende Dichtung 2 besitzt die bereits erwähnte erste radiale Dichtlippe 2.1 und die zweite radiale Dichtlippe 2.2. Radial meint hier eine radiale Positionierung der Dichtlippen 2.1 und 2.2 an dem Filterrahmen 1 radial zur Erstreckung des Filters 10 bzw. zur Durchströmungsrichtung L des Filters 10. Die Durchströmungsrichtung L des Filters 10 ist durch einen Pfeil angedeutet. Die Erstreckungsrichtung des Filters 10 wird durch eine gestrichelte Mittelachse des Filters 10 angedeutet. In Durchströmungsrichtung L stromaufwärtig zur ersten radialen Dichtlippe 2.1 und zur zweiten radialen Dichtlippe 2.2 besitzt die umlaufende Dichtung 2 eine Staublippe 2.3. Diese dient zur Abdeckung des Spalts 12 zwischen Filterrahmen 1 und Gehäuse 20. Die erste radiale Dichtlippe 2.1 und die zweite radiale Dichtlippe 2.2 sind annähernd parallel zueinander angeordnet und die erste radiale Dichtlippe 2.1 ist in einem Neigungswinkel α1 und die die zweite radiale Dichtlippe 2.2 ist in einem Neigungswinkel α2 entgegen der Durchströmungsrichtung L geneigt. Die Staublippe 2.3 hingegen ist um einen Neigungswinkel β in Durchströmungsrichtung L geneigt. Des Weiteren weist die umlaufende Dichtung 2 eine Kompensationsnut 2.4 auf, welche als - in Durchströmungsrichtung L gesehen - anströmseitige umlaufende Vertiefung ausgebildet ist. Nach erfolgter Montage des Filters 10 in dem Gehäuse sind sowohl die Staublippe 2.3 als auch die Kompensationsnut 2.4 der umlaufenden Dichtung 2 zu sehen. Die erste radiale Dichtlippe 2.1 und die zweite radiale Dichtlippe 2.2 hingegen verschwinden in dem Spalt 12 zwischen Filterrahmen 1 und Gehäuse 20 und sind somit nicht sichtbar.

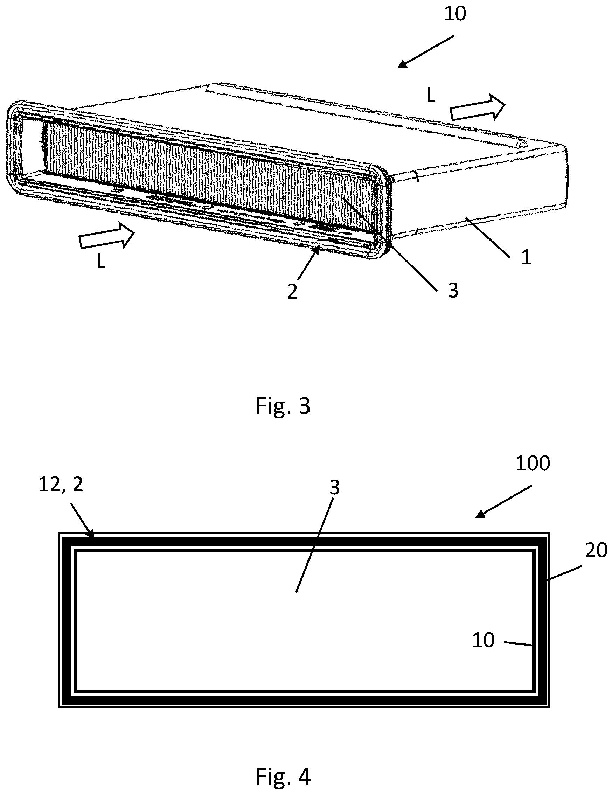

Fig. 3 zeigt eine räumliche Darstellung einer Ausführungsform eines Kassettenfilters 10, der von Luft L durchströmt wird. Der Kassettenfilter 10 besitzt einen quaderförmigen Filterrahmen 1, welcher an zwei Stirnseiten geöffnet ist und von zu reinigender Luft durchströmt werden kann. In dem Filterrahmen 1 wird mindestens ein Filterelement 3 aufgenommen. In Figur 3 sichtbar ist nur ein Filterelement 3, welches als Faltenbalg ausgeführt ist. Denkbar ist jedoch auch, dass in dem Filterrahmen 1 mehrere in Reihe angeordnete Filterelemente 3 angeordnet sind und der Filter 10 einen sogenannten Multistage-Aufbau besitzt. Am außenseitigen Umfang des Filterrahmens 1 befindet sich auch hier eine umlaufende Dichtung 2, welche denselben Aufbau haben kann, wie die anhand der Figuren 1 und 2 beschriebene umlaufende Dichtung 2.

Fig. 4 zeigt eine grob schematische Ansicht einer Filteranordnung 100. In dieser Ansicht ist der Spalt 12 zwischen dem Filterrahmen 1 des Filters 10 und dem Gehäuse 20 zu erkennen. In diesem Spalt 12 erfolgt durch die umlaufende Dichtung 2 eine Abdichtung des Filters 10 relativ zum Gehäuse 20.

In allen vorstehend beschriebenen Ausführungsbeispielen kann die umlaufende Dichtung 2 als Spritzgussteil aus spritzgießfähigem thermoplastischem Elastomer (TPE) ausgeführt sein. In Versuchen wurde festgestellt, dass TPE mit einer Shore-Härte A im Bereich von 50 - 70 besonders geeignet ist, da so ein besonders guter und sicherer Presssitz des Filters 10 in dem Gehäuse 20 realisiert wird.

Der Filter 10 ist in beiden vorstehend beschriebenen Ausführungsvarianten mit seiner umlaufenden Dichtung 2 in einem Presssitz in dem Gehäuse 20 aufgenommen. Das heißt, die umlaufende Dichtung 2 ist einerseits gut mit dem Filterrahmen 1 verbunden, z.B. stoffschlüssig, und ist andererseits kraftschlüssig mit dem Gehäuse 20 verbunden, so dass der Filter 10 auch ohne weitere Befestigungsmittel sicher in dem Gehäuse 20 gehalten wird. Auch bei Erschütterungen der Filteranordnung 100 behält der Filter 10 seinen definierten Sitz in dem Gehäuse 20 bei. Der Presssitz von umlaufender Dichtung 2 und Gehäuse 20 wird realisiert, indem die Passung zwischen der Öffnung des Gehäuses 20 und den radialen Dichtlippen 2.1 und 2.2 der umlaufenden Dichtung 2 so gewählt ist, dass eine Presspassung erreicht wird.

### Bezugszeichenliste

- 1: Filterrahmen
- 2: umlaufende Dichtung
- 2.1: erste radiale Dichtlippe
- 2.2: zweite radiale Dichtlippe
- 2.3.: Staublippe
- 2.4: Kompensationsnut
- 3: Filterelement(e)

- 10: Filter
- 12: Spalt
- 20: Gehäuse

- 100: Filteranordnung

- L: Durchströmungsrichtung

- α1 α2: Neigungswinkel Dichtlippe
- β: Neigungswinkel Staublippe

## Patentansprüche

1. Filteranordnung (100) mit einem Filter (10) und einem Gehäuse (20) zur Aufnahme des Filters (10), wobei der Filter (10) einen Filterrahmen (1) besitzt, in welchem mindestens ein Filterelement (3) aufgenommen ist und wobei an dem Filterrahmen (1) eine umlaufende Dichtung (2) mit mindestens einer radialen Dichtlippe (2.1) angeordnet ist,
wobei der Filter (10) mit seiner umlaufenden Dichtung (2) in einem Presssitz in dem Gehäuse (20) aufgenommen ist, wobei die umlaufende Dichtung (2) zwei Dichtlippen (2.1, 2.2) und eine Staublippe (2.3) aufweist
**dadurch gekennzeichnet, dass**
die zwei umlaufenden Dichtlippen (2.1, 2.2) um einen spitzen Neigungswinkel (α1, α2) entgegen einer Durchströmungsrichtung (L) geneigt sind und die Staublippe (2.3) um einen spitzen Neigungswinkel (β) in Durchströmungsrichtung (L) geneigt ist.

2. Filteranordnung nach Anspruch 1, **dadurch gekennzeichnet, dass** die umlaufende Dichtung (2) und das Gehäuse (20) kraftschlüssig miteinander verbunden sind.

3. Filteranordnung nach einem der vorangehenden Ansprüche, **dadurch gekennzeichnet, dass**
die umlaufende Dichtung (2) zwei parallel verlaufende Dichtlippen (2.1, 2.2) aufweist.

4. Filteranordnung nach einem der vorangehenden Ansprüche, **dadurch gekennzeichnet, dass**
die umlaufende Dichtung (2) eine Kompensationsnut (2.4) aufweist, welche als anströmseitige umlaufende Vertiefung ausgebildet ist.

5. Filteranordnung nach einem der vorangehenden Ansprüche, **dadurch gekennzeichnet, dass**
die umlaufende Dichtung (2) als Spritzgussteil aus spritzgießfähigem thermoplastischem Elastomer (TPE) ausgeführt ist.

6. Filteranordnung nach einem der vorangehenden Ansprüche, **dadurch gekennzeichnet, dass**
das Material der umlaufenden Dichtung (2) eine Shore Härte A von 30 - 78 besitzt, insbesondere von 50 - 70.

7. Filteranordnung nach einem der vorangehenden Ansprüche, **dadurch gekennzeichnet, dass**
der Filter (10) als Kassettenfilter oder als Taschenfilter oder als Panelfilter ausgeführt ist.

8. Filteranordnung nach einem der vorangehenden Ansprüche, **dadurch gekennzeichnet, dass**
die umlaufende Dichtung (2) und der Filterrahmen (1) stoffschlüssig miteinander verbunden sind und der Filterrahmen (1) und die umlaufende Dichtung (2) insbesondere im Mehr-Komponenten-Spritzgussverfahren hergestellt sind.

9. Verwendung einer Filteranordnung nach einem der vorangehenden Ansprüche als Innenraumluftfilteranordnung zur Filtration und Reinigung der Kabinenzuluft in einem Fahrzeug, insbesondere in einem Nutzfahrzeug, einem Schwerlastfahrzeug oder einem Offroadfahrzeug.

## Claims

1. Filter assembly (100) having a filter (10) and a housing (20) for receiving the filter (10), wherein the filter (10) possesses a filter frame (1) in which is received at least one filter element (3), and wherein an encircling seal (2) having at least one radial seal lip (2.1) is disposed on the filter frame (1);
wherein the filter (10) by way of the encircling seal (2) thereof is received in a press fit in the housing (20), wherein the encircling seal (2) has two seal lips (2.1, 2.2) and one dust lip (2.3),
**characterized in that**
the two encircling seal lips (2.1, 2.2) are inclined counter to a flow direction (L) at an acute inclination angle (α1, a2), and the dust lip (2.3) is inclined in the flow direction (L) at an acute inclination angle (β).

2. Filter assembly according to Claim 1, **characterized in that**
the encircling seal (2) and the housing (20) are connected to one another in a force-fitting manner.

3. Filter assembly according to one of the preceding claims, **characterized in that**
the encircling seal (2) has two seal lips (2.1, 2.2) running in parallel.

4. Filter assembly according to one of the preceding claims, **characterized in that**
the encircling seal (2) has a compensation groove (2.4) which is configured as an encircling depression on the inflow side.

5. Filter assembly according to one of the preceding claims, **characterized in that**
the encircling seal (2) is embodied as an injection-moulded part made from an injection-moulding capable thermoplastic elastomer (TPE).

6. Filter assembly according to one of the preceding claims, **characterized in that**
the material of the encircling seal (2) possesses a Shore hardness A of 30 to 78, in particular of 50 to 70.

7. Filter assembly according to one of the preceding claims, **characterized in that**
the filter (10) is embodied as a cartridge filter or as a pocket filter or as a panel filter.

8. Filter assembly according to one of the preceding claims, **characterized in that**
the encircling seal (2) and the filter frame (1) are connected to one another in a cohesively bonded manner, and the filter frame (1) and the encircling seal (2) are in particular produced by the multicomponent injection-moulding method.

9. Use of a filter assembly according to one of the preceding claims as an interior air filter assembly for filtering and cleaning the fresh air of a cabin in a vehicle, in particular a commercial vehicle, a heavy-duty truck, or an offroad vehicle.

## Revendications

1. Ensemble de filtration (100) comprenant un filtre (10) et un boîtier (20) destiné à loger le filtre (10), le filtre (10) possédant un cadre de filtre (1) dans lequel au moins un élément filtrant (3) est logé et une garniture d'étanchéité périphérique (2) pourvue d'au moins une lèvre d'étanchéité radiale (2.1) étant disposée sur le cadre de filtre (1),
le filtre (10) pourvu de sa garniture d'étanchéité périphérique (2) étant logé sans jeu dans le boîtier (20), la garniture d'étanchéité périphérique (2) comportant deux lèvres d'étanchéité (2.1, 2.2) et une lèvre anti-poussière (2.3),
**caractérisé en ce que**
les deux lèvres d'étanchéité périphériques (2.1, 2.2) sont inclinées d'un angle d'inclinaison aigu (α1, α2) dans un sens opposé au sens d'écoulement (L) et la lèvre anti-poussière (2.3) est inclinée d'un angle d'inclinaison aigu (β) dans le sens d'écoulement (L).

2. Ensemble de filtration selon la revendication 1, **caractérisé en ce que**
la garniture d'étanchéité périphérique (2) et le boîtier (20) sont solidaires l'un de l'autre.

3. Ensemble de filtration selon l'une des revendications précédentes, **caractérisé en ce que**
la garniture d'étanchéité périphérique (2) comporte deux lèvres d'étanchéité parallèles (2.1, 2.2) .

4. Ensemble de filtration selon l'une des revendications précédentes, **caractérisé en ce que**
la garniture d'étanchéité périphérique (2) comporte une rainure de compensation (2.4) qui est conçue sous la forme d'un creux périphérique côté entrée.

5. Ensemble de filtration selon l'une des revendications précédentes, **caractérisé en ce que**
la garniture d'étanchéité périphérique (2) est conçue comme une pièce moulée par injection en élastomère thermoplastique (TPE) moulable par injection.

6. Ensemble de filtration selon l'une des revendications précédentes, **caractérisé en ce que**
le matériau de la garniture d'étanchéité périphérique (2) présente une dureté Shore A de 30 à 78, en particulier de 50 à 70.

7. Ensemble de filtration selon l'une des revendications précédentes, **caractérisé en ce que**
le filtre (10) est conçu comme un filtre à cassette ou comme un filtre à poches ou comme un filtre à panneaux.

8. Ensemble de filtration selon l'une des revendications précédentes, **caractérisé en ce que**
la garniture d'étanchéité périphérique (2) et le cadre de filtre (1) sont reliés l'un à l'autre par une liaison de matière et le cadre de filtre (1) et la garniture d'étanchéité périphérique (2) sont fabriqués notamment par un procédé de moulage par injection à plusieurs composants.

9. Utilisation d'un ensemble de filtration selon l'une des revendications précédentes comme ensemble de filtration à air d'habitacle destiné à filtrer et nettoyer l'air d'alimentation d'habitacle dans un véhicule, en particulier dans un véhicule utilitaire, un véhicule poids lourd ou un véhicule tout-terrain.
